# EUROPEAN PATENT SPECIFICATION

(11) **EP 3 873 124 B1**
(45) Date of publication and mention of the grant of the patent: **25.10.2023**
(21) Application number: 21167877.6
(22) Date of filing: 06.03.2017
(51) Int. Cl.: H04W 24/00

(54) **MEASUREMENTS BASED ON SUBCARRIER SPACING OF NEIGHBORING CARRIERS**
MESSUNGEN AUF BASIS DES UNTERTRÄGERABSTANDS VON NACHBARTEN TRÄGERN
MESURES BASÉES SUR L'ESPACEMENT DES SOUS-PORTEURS DES PORTEURS VOISINS

(30) Priority: 29.09.2016 US 201662401721 P
(43) Date of publication of application: 01.09.2021
(62) Divisional of application: 17711528.4
(73) Proprietor: Apple Inc., Cupertino, CA 95014 (US)
(72) Inventor: HUANG, Rui, Beijing, 100085 (CN); TANG, Yang, Santa Clara, CA 95052 (US); YIU, Candy, Portland, OR 97201 (US)
(74) Representative: Lang, Johannes

(56) References cited:
- WO-A1-2015/100556
- WO-A1-2015/135589
- US-A1- 2012 307 922
- HUAWEI ET AL: "Discussion on the RRM impacts of NR", 3GPP DRAFT; R4-166055 DISCUSSION ON THE RRM IMPACTS OF NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Gothenburg; 20160822 - 20160826 21 August 2016 (2016-08-21), XP051128480, Retrieved from the Internet: URL:http://www.3gpp.org/ftp/Meetings_3GPP_ SYNC/RAN4/Docs/ [retrieved on 2016-08-21]
- ERICSSON: "Impact of decisions on bandwidth and subcarrier spacing on RRM requirements", 3GPP DRAFT; R4-165128, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Gothenburg, Sweden; 20160822 - 20160826 21 August 2016 (2016-08-21), XP051127883, Retrieved from the Internet: URL:http://www.3gpp.org/ftp/Meetings_3GPP_ SYNC/RAN4/Docs/ [retrieved on 2016-08-21]
- INTEL CORPORATION: "Design on NR DL Synchronization", 3GPP DRAFT; R1-167705, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051126042, Retrieved from the Internet: URL:http://www.3gpp.org/ftp/Meetings_3GPP_ SYNC/RAN1/Docs/ [retrieved on 2016-08-21]
- INTEL CORPORATION: "Considerations on NR RRM with the flexible numerologies", 3GPP DRAFT; R4-1700537 NR RRM NUMEROLOGY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Athens, Greece; 20170213 - 20170217 3 February 2017 (2017-02-03), XP051225623, Retrieved from the Internet: URL:http://www.3gpp.org/ftp/tsg_ran/WG4_Ra dio/TSGR4_82/Docs/ [retrieved on 2017-02-03]

## Description

### Related Application

### Technical Field

The present disclosure relates to cellular networks and more specifically to measurement and communication of numerology of subcarrier spacing performed by an apparatus of a user equipment.

### Background

Wireless mobile communication technology uses various standards and protocols to transmit data between a base station and a wireless mobile device. Wireless communication system standards and protocols can include the 3rd Generation Partnership Project (3GPP) long term evolution (LTE) and fifth generation (5G or new radio (NR)); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi. In 3GPP radio access networks (RANs) in LTE systems and 5G NR, the base station can include a RAN Node such as a Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE). In fifth generation (5G) wireless RANs, RAN Nodes can include a 5G Node (gNB).

RANs use a radio access technology (RAT) to communicate between the RAN Node and UE. RANs can include global system for mobile communications (GSM), enhanced data rates for GSM evolution (EDGE) RAN (GERAN), Universal Terrestrial Radio Access Network (UTRAN), and/or E-UTRAN, which provide access to communication services through a core network. Each of the RANs operates according to a specific 3GPP RAT. For example, the GERAN 104 implements GSM and/or EDGE RAT, the UTRAN 106 implements universal mobile telecommunication system (UMTS) RAT or other 3GPP RAT, and the E-UTRAN 108 implements LTE RAT.

A core network can be connected to the UE through the RAN Node. The core network can include a serving gateway (SGW), a packet data network (PDN) gateway (PGW), an access network detection and selection function (ANDSF) server, an enhanced packet data gateway (ePDG) and/or a mobility management entity (MNM).

WO 2015/100556 A1 discloses a neighbor cell measurement method and device, the method comprising: a user equipment (UE) receives the configuration information of at least two mutually independent radio resource management (RRM) measurement flows transmitted by a base station, the RRM measurement flows being configured by the base station according to the information of a neighbor cell to be measured; the UE employs at least two mutually independent RRM measurement flows to conduct RRM measurement on a carrier, and respectively acquires at least two RRM measurement results; and the UE reports the RRM measurement results to the base station. The neighbor cell measurement method and device of the present invention realize neighbor cell discovery and measurement in a network noncontinuously transmitting reference signals for RRM measurement.

WO 2015/135589 A1 discloses apparatuses, methods, computer programs, computer program products and computer-readable media regarding dormant cell RRM (Radio Resource Management) measurement reporting. Certain aspects include configuring, at a base station, a measurement configuration message for causing user equipment served by the base station to perform and report measurements on cells, the measurement configuration message comprising information indicating criteria impacting a measurement reporting procedure with respect to the cells, the said criteria being related to at least one of the state of a cell, a type of a cell, and a type of a signal used for the measurements of the cells, and transmitting said configured measurement configuration message to the user equipment.

### SUMMARY OF THE INVENTION

The invention is defined by the claimed apparatus of a user equipment.

### Brief Description of the Drawings

FIG. 1 is a diagram illustrating a set of physical resource blocks with different numerology consistent with embodiments disclosed herein.
FIG. 2 is a table illustrating a set of reference signal received power test parameters consistent with embodiments disclosed herein.
FIG. 3 is a diagram of a set of neighboring radio access network (RAN) nodes numerology consistent with embodiments disclosed herein.
FIG. 4 is a diagram illustrating sampling of resource blocks consistent with embodiments disclosed herein.
FIG. 5 is a process diagram for broadcasting measurement information consistent with embodiments disclosed herein.
FIG. 6 is an example of an information element for broadcasting measurement information consistent with embodiments disclosed herein.
FIG. 7 is a process diagram for conveying measurement information consistent with embodiments disclosed herein.
FIG. 8 is an example of an information element for conveying measurement information consistent with embodiments disclosed herein.
FIG. 9 is a table illustrating a set of reference signal received power test parameters including subcarrier spacing consistent with embodiments disclosed herein.
FIG. 10 is a flow chart illustrating a method for determining minimum measurement bandwidth consistent with embodiments disclosed herein.
FIG. 11 is a schematic diagram illustrating a structure of a long term evolution (LTE) communication frame consistent with embodiments disclosed herein.
FIG. 12 is a diagram illustrating a portion of a cellular communication system consistent with embodiments disclosed herein.
FIG. 13 is a block diagram illustrating electronic device circuitry consistent with embodiments disclosed herein.
FIG. 14 is a block diagram illustrating components of a user equipment (UE) or mobile station (MS) device consistent with embodiments disclosed herein.
FIG. 15 is a diagram illustrating components able to read instructions from a machine-readable or computer-readable medium.

### Detailed Description

A detailed description of systems and methods consistent with embodiments of the present disclosure is provided below.

Techniques, apparatus and methods are disclosed that enable selecting a minimum measurement bandwidth based on a baseline reference value of subcarrier spacing. For example, if the baseline reference value is (*f*₀), the minimum measurement bandwidth is selected to be *M* × 2*ⁿ* × *f*₀ where *n* ≥ 3 and *M* is selected by the RAN Node. In some embodiments, *M* > 0 and is an integer.

Techniques, apparatus and methods are also disclosed that enable communication of neighboring cell numerology for subcarrier spacing to a user equipment (UE). For example, a RAN node can transmit an information element describing neighboring cell subcarrier spacing using a system information block (SIB) broadcast or using radio resource control (RRC) signaling to the UE. In some embodiments, the RAN node can transmit information for some but not all neighboring nodes.

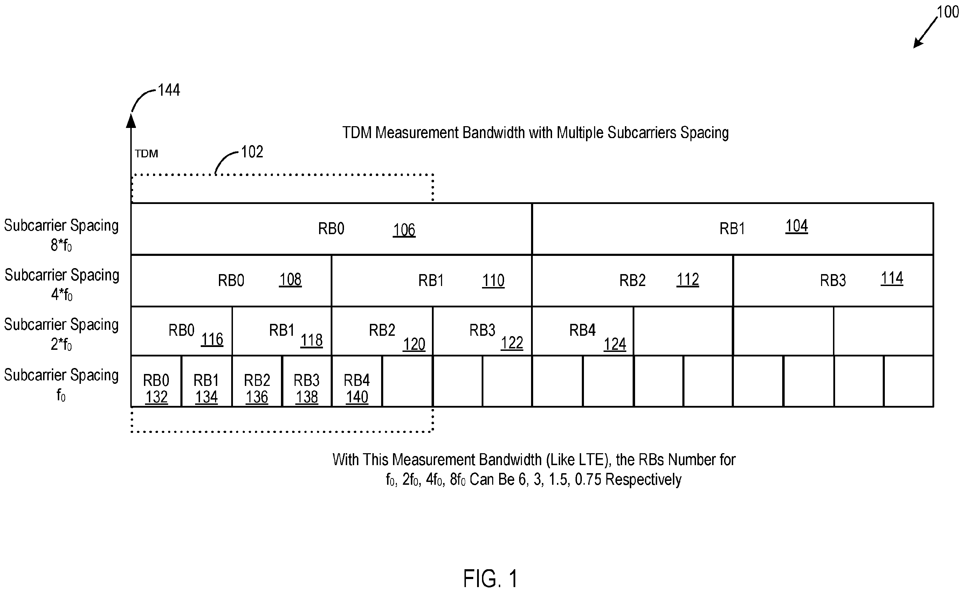

In one carrier when multiple numerologies are time domain multiplexed, resource blocks (RBs, which are also known as physical resource blocks (PRBs)) for different numerologies are located on a fixed grid relative to each other. For subcarrier spacing of 2*ⁿ* × 15*kHz*, the RB grids in time and frequency can be defined as a subset or superset of the RB grid for subcarrier spacing of 15 kHz in a nested manner in the frequency domain. Note that following numbering in FIG. 1 is just an example embodiment. FFS can be a frequency domain multiplexing case.

### Selecting a Minimum Measurement Bandwidth

In selecting a minimum measurement bandwidth, the network can send a different numerology to the UE when it is in both idle and connected. Multiple specifications for the multiple numerologies can be provided in NR specification. However, some specifications can be based on a worst case and non-scenario specific assumptions, yet it can be desirable to reduce a UE complexity and testing efforts. As such, a single minimum measurement bandwidth can be defined for NR radio resource management (RRM).

If a subcarrier spacing is different, a number of RBs within a same measurement bandwidth can also be different. For example, a minimum measurement bandwidth is specified by 6 RBs with *f*₀ subcarrier spacing as used in LTE (e.g., LTE legacy RRM specification). For RBs which have a subcarrier spacing of 2*ⁿ* × *f*₀ where *n* ≥ 3, it is possible that there are not the integral RBs including in this minimum measurement bandwidth as shown in FIG 1. For instance, a minimum measurement bandwidth for the RRM specification is 6 RBs assuming *f*₀ subcarrier spacing in NR. There would be 0.75 RBs available for measurement when 8 × *f*₀subcarrier spacing is applied.

FIG. 1 is a diagram illustrating a set 100 of physical resource blocks with different numerology. A baseline reference value of subcarrier spacing is *f*₀ which is used by RBs 132, 134, 136, 138 and 140. A reference value of subcarrier spacing is *f*₁ of 2 × *f*₀ is used by RBs 116, 118, 120, 122 and 124. A reference value of subcarrier spacing is *f*₂ of 4 × *f*₀ is used by RBs 108, 110, 112 and 114. A reference value of subcarrier spacing is *f*₃ of 8 × *f₀* is used by RBs 106 and 104. If a measurement bandwidth 102 of 6 RBs is used (or 6 × *15kHz = 90kHz,* if *f₀* = 15*kHz*)*,* then measurement bandwidth 102 would be an integer for *f*₀ and *f*₁ (6 and 3 respectively), but not for *f*₂ and *f*₃ (1.5 and 0.75 respectively).

For example, the RB grids in time and frequency can be defined as a subset or superset of the RB grid for subcarrier spacing of *f*₀*.* The measurement bandwidth 102 can be defined in terms of *f*₀ (which can be in RBs, frequency, etc.) and satisfy the equation of 2*ⁿ* × *f*₀ where *n* ≥ 3. In an embodiment, *f*₀ = 15*kHz,* which would make a minimum measurement bandwidth of 120 kHz. However, higher measurement bandwidth can be selected such that larger subcarrier spacing can be measured, including *f*₄*, f*₅*, f*₆*,* etc. In some embodiments, *f*₀ < *15kHz.* In other embodiments, *f*₀ > *15kHz.*

In an embodiment, a single minimum measurement bandwidth (in Hz) is used for measurement specifications with multiple numerologies; it is composed of 2*ⁿ* RBs where *n* ≥ 3 based on at least the baseline reference subcarrier spacing.

In another embodiment, minimum measurement bandwidth can be based on a reference numerology (e.g., the subcarrier spacing *f*₀). A single minimum measurement bandwidth (in Hz) is used for measurement specifications with the multiple numerologies. The single minimum measurement bandwidth is composed of 2*ⁿ* RBs where *n* ≥ 3 RBs based on at least the baseline reference subcarrier spacing.

In one embodiment, a single minimum measurement bandwidth (in RBs) is used for measurement specifications with multiple numerologies; it is composed of 2*ⁿ* RBs where *n* ≥ 3 based on at least the baseline reference subcarrier spacing.

In some embodiments, minimum measurement bandwidth can be based on a reference numerology (e.g., the subcarrier spacing *f*₀). A single minimum measurement bandwidth (in RBs) is used for measurement specifications with the multiple numerologies. The single minimum measurement bandwidth is composed of 2*ⁿ* RBs where *n* ≥ 3 RBs based on at least the baseline reference subcarrier spacing.

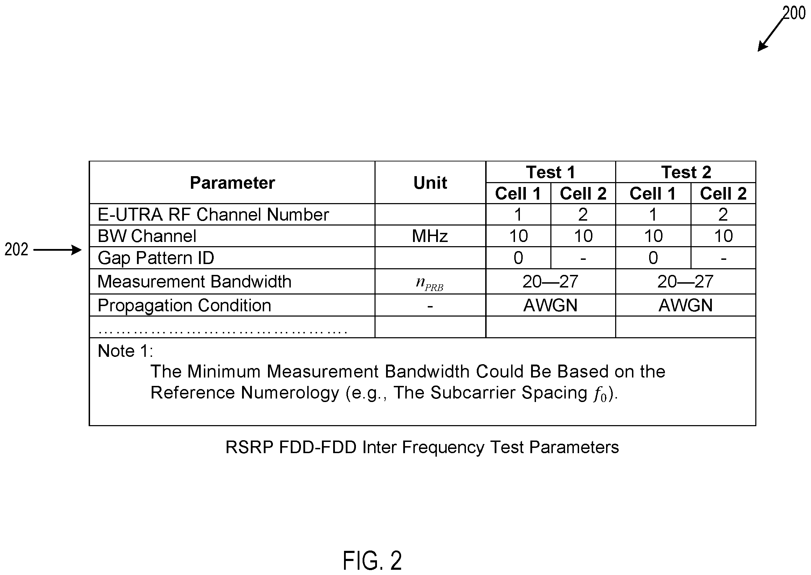

FIG. 2 is a table illustrating a set 200 of reference signal received power test parameters. The reference signal received power test parameters can include a measurement bandwidth parameter. This parameter can inform a UE of a measurement bandwidth in Hz, number of RBs, multiples of *f₀* or n as it relates to *f*₀. In the embodiment shown, the UE can use a measurement bandwidth of 20-27 RBs.

### Communicating a Subcarrier Spacing Numerology

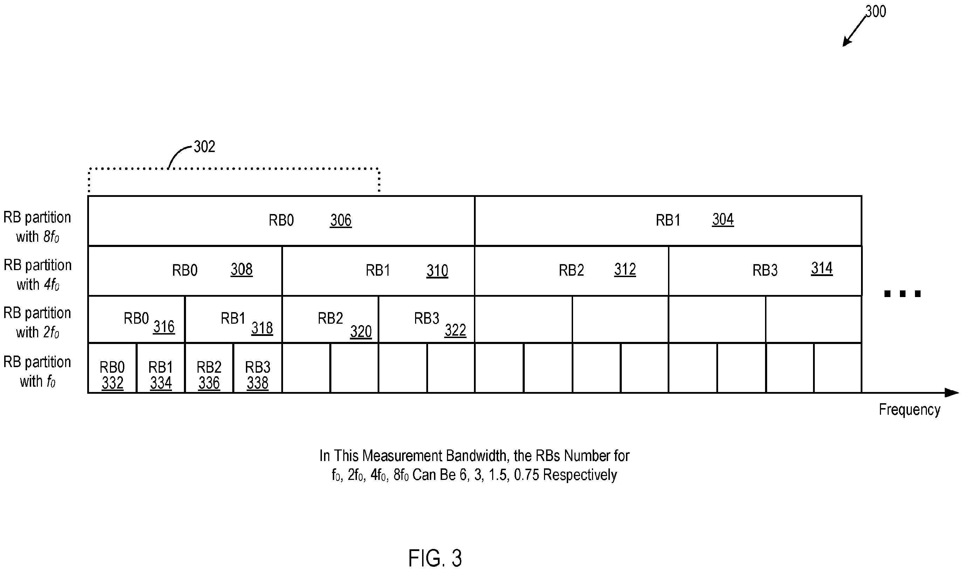

A number of RBs within a same measurement bandwidth can be different. If there is 6 RBs within a measurement bandwidth as in LTE, it is possible to misalign the measurement bandwidth between carriers with a *f₀* subcarrier spacing and other carriers with 2 × *f*₀ subcarrier spacing as shown in FIG. 3

For example, FIG. 3 is a diagram of a set 300 of neighboring radio access network (RAN) nodes numerology. A baseline reference value of subcarrier spacing is *f*₀ which is used by a first carrier with RBs 332, 334, 336, 338 and 140. A reference value of subcarrier spacing is *f*₁ of 2 × *f*₀ is used by a second carrier with RBs 316, 318, 320 and 322. A reference value of subcarrier spacing is *f*₂ of 4 × *f*₀ is used by a third carrier with RBs 308, 310, 312 and 314. A reference value of subcarrier spacing is *f*₃ of 8 × *f*₀ is used by a fourth carrier with RBs 306 and 304. If a measurement bandwidth 302 of 6 RBs is used (or 6 × *15kHz* = *90kHz,* if *f₀* = 15*kHz*)*,* then measurement bandwidth 302 would be an integer for carriers using *f*₀ and *f*₁ (6 and 3 respectively), but not for carriers using *f*₂ and *f*₃ (1.5 and 0.75 respectively). To help the UE determine a measurement bandwidth, the network can send the different numerology to the UE when it is in both idle and connected, allowing it to know the numerology of neighboring carriers.

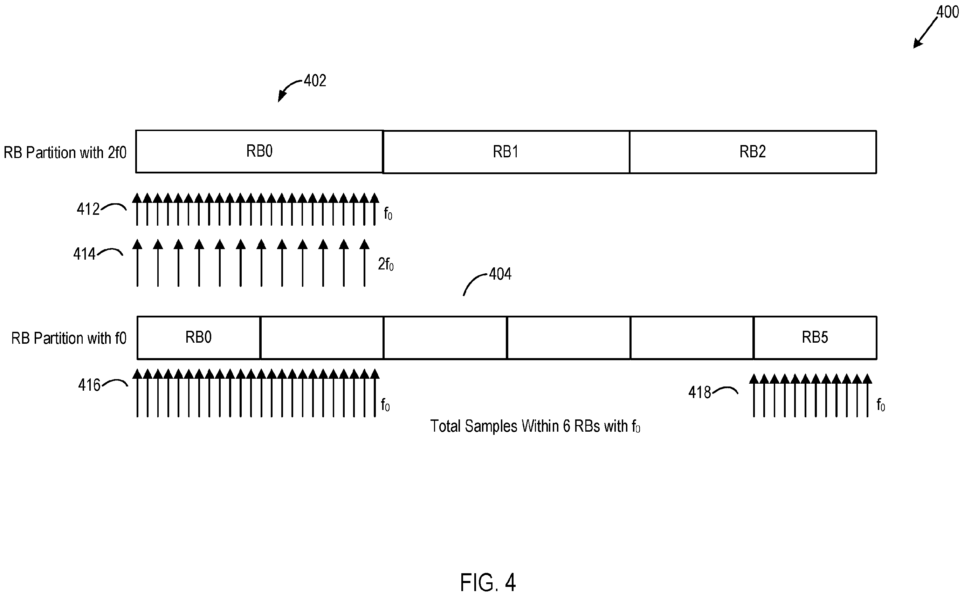

For example, in LTE, RRM measurements are based on a single subcarrier spacing, e.g., 15 kHz. The measurement bandwidth defined with the number of RBs can be the same for LTE cells to be measured. However, in NR with various subcarrier spacing for the intra-frequency or inter-frequency measurement cells, a number of measurement samples within the same measurement bandwidth in RBs can be different while assuming the same subcarriers spacing without oversampling. For example, in FIG. 4, if the same subcarrier spacing applied, a total measurement samples 412 for the carrier 402 with 2*f*₀ subcarrier spacing can be double (samples 416) that of carrier 404 with *f*₀ subcarrier spacing. In other words, the carriers which include the reference signal (e.g., CRS in LTE) can be oversampled (samples 412), but a total number of the measurement reference signal (samples 414) was half of these with single sampling with 2*f*₀ subcarrier spacing.

As a result, measurement results can be diverse within different measurement samples 412, 414 and 416. To avoid such problems on the measurement cells in NR, the UE can be informed of a subcarrier spacing of the measurement neighbor cells. Otherwise, UE measurement results could be over- or underestimated with the more or less samples. In some embodiments, to obtain the enough measurement sampling, a subcarrier spacing of the measured neighbor cells can be known to UE.

For intra-frequency measurement, the same numerology can be derivated for the measurement carriers based on the serving cells. For inter-frequency measurement, there can be two approaches: (1) for a UE in RRC_IDLE, a SIB includes the subcarrier spacing of measurement carriers; and/or (2) for a UE in RRC_CONNECT, RRC singling includes the subcarrier spacing of measurement carriers. In some embodiments, the measurement bandwidth and also the subcarrier spacing can be specified. For example, both the measurement bandwidth and the subcarrier spacing for the different measurements can be specified in RRM measurement specifications in NR.

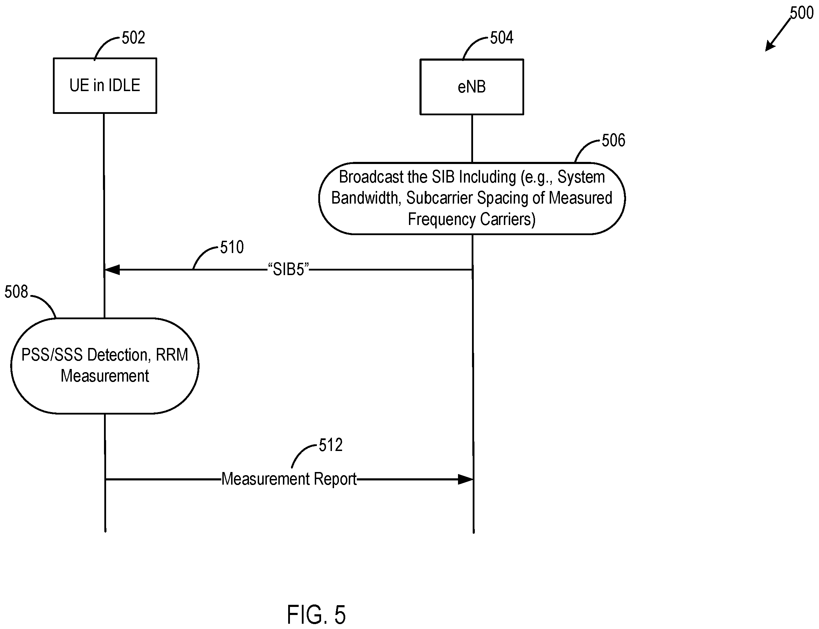

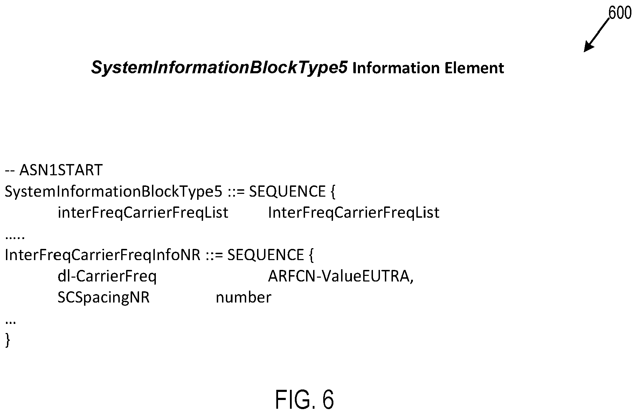

Regarding (1) for a UE in RRC_IDLE, FIG. 5 is a process diagram 500 for broadcasting measurement information consistent with embodiments disclosed herein. For UE inter-frequency measurement in the idle state, these measurement configurations can be broadcast to UE using a system information block (SIB) which can include an information element (such as SystemInformationBlockType5 Information Element shown in FIG. 6). In block 506, A RAN node (such as eNB 504) can broadcast 510 a SIB including measurement information for neighboring carriers (e.g., system bandwidth, subcarrier spacing of measured frequency carriers, etc.). The measurement information can be for intra-frequency measurement or inter-frequency measurement. In block 508, a UE in IDLE can detect and/or synchronize with a primary synchronization signal (PSS) and/or secondary synchronization signal (SSS) and perform radio resource management (RRM) measurements based on the IE. These measurements can be transmitted 512 back from the UE 502 to the eNB 504 in a measurement report.

FIG. 6 is an example of an information element for broadcasting measurement information. The information element can be broadcast in the SIB as seen in FIG. 5 in broadcast 510. In the embodiment shown, the information element 600 can include a list of carrier frequencies. The list of carrier frequencies can include a downlink carrier frequency, absolute radio frequency channel number (ARFCN) and a subcarrier spacing identifier.

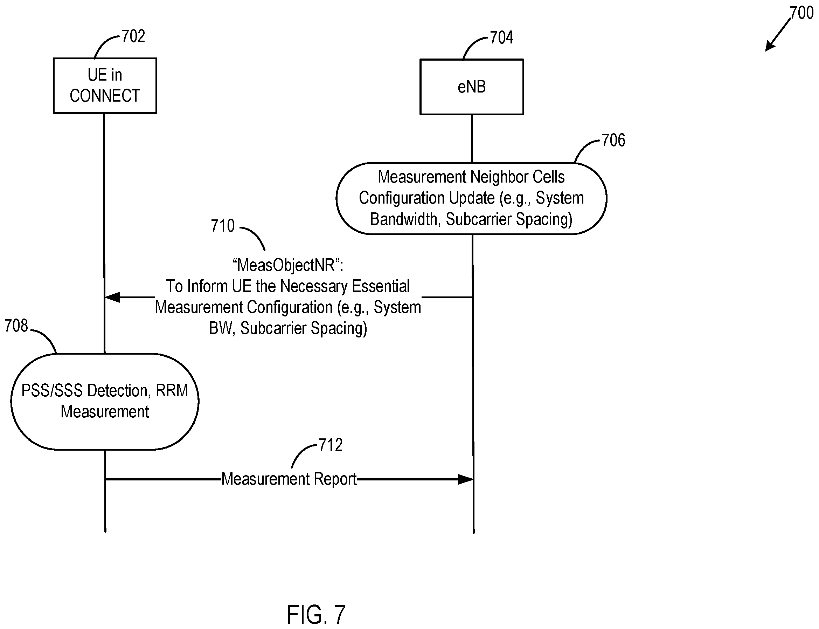

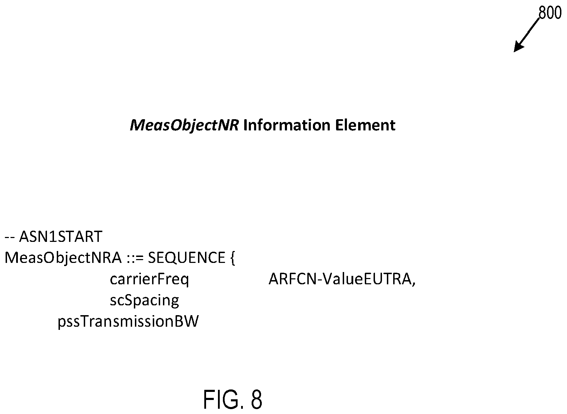

Regarding (2) for a UE in RRC_CONNECT, FIG. 7 is an example of an information element (IE) for broadcasting measurement information. For UE inter-frequency measurement in the connected state, the measurement information can be transmitted to the UE 702 by a RAN node (e.g., eNB 704) using RRC signaling. For example, eNB 704 generates a configuration update for measurement of neighbor cells (e.g., system bandwidth, subcarrier spacing, etc.). The eNB 704 transmits an IE to inform the UE of the measurement configuration (and/or update to the configuration) using RRC signaling. For example, the IE can be a MeasObjectNR IE as described in FIG. 8. In block 708, a UE in CONNECT can detect and/or synchronize with a primary synchronization signal (PSS) and/or secondary synchronization signal (SSS) and perform radio resource management (RRM) measurements based on the IE information. These measurements can be transmitted 712 back from the UE 702 to the eNB 704 in a measurement report.

FIG. 8 is an example of an information element for conveying measurement information. The information element 800 can be broadcast in the SIB as seen in FIG. 7 in transmission 710. In the embodiment shown, the information element 800 can include a list of carrier frequencies. The list of carrier frequencies can include a carrier frequency, absolute radio frequency channel number (ARFCN) and a subcarrier spacing identifier.

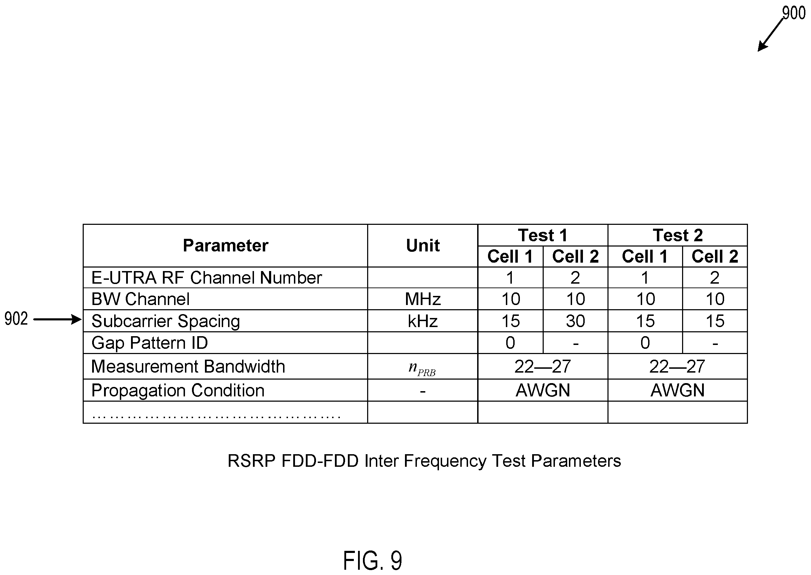

FIG. 9 is a table illustrating a set 900 of reference signal received power test parameters including subcarrier spacing. The reference signal received power test parameters can include a subcarrier spacing parameter. This parameter can inform a UE of a subcarrier spacing in Hz, number of RBs, multiples of *f*₀ or n as it relates to *f*₀. In the embodiment shown, the UE can use a measurement bandwidth of 15 kHz for test 1 cell 1, 30 kHz for test 1, cell 2, 15 kHz for test 2 cell 1 and 15 kHz for test 2 cell 2. In some embodiments, specifications are specified for the subcarrier spacing and other numerology (e.g., slot width).

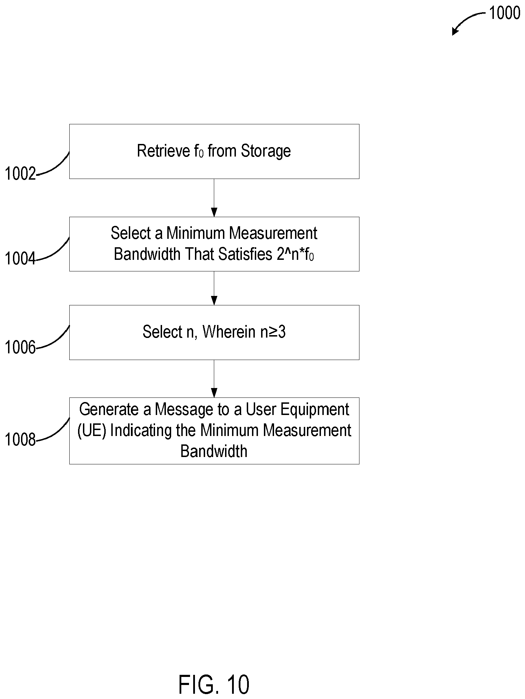

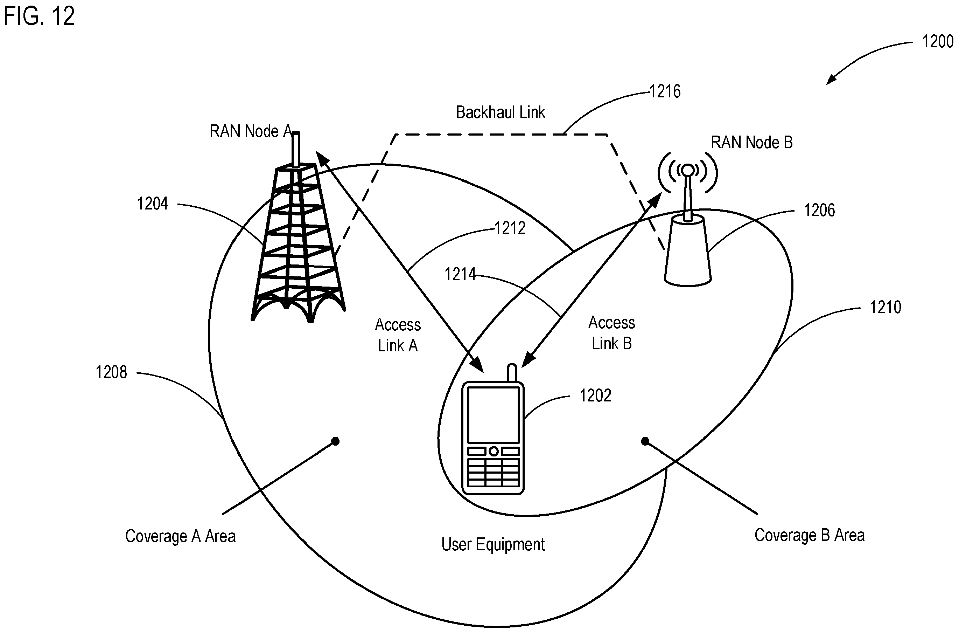

FIG. 10 is a flow chart illustrating a method 1000 for determining a measurement bandwidth using a baseline reference value for subcarrier spacing. This can be accomplished by a system such as shown in FIG. 12 including RAN Node A 1204 and UE 1202. In block 1002, a RAN Node retrieves *f*₀ from storage. In block 1004, the RAN Node selects a minimum measurement bandwidth that satisfies 2*ⁿ* × *f*₀. In block 1006, the RAN Node selects n, wherein *n* ≥ 3. In block 1008, the RAN Node generates a message to a user equipment (UE) indicating the minimum measurement bandwidth.

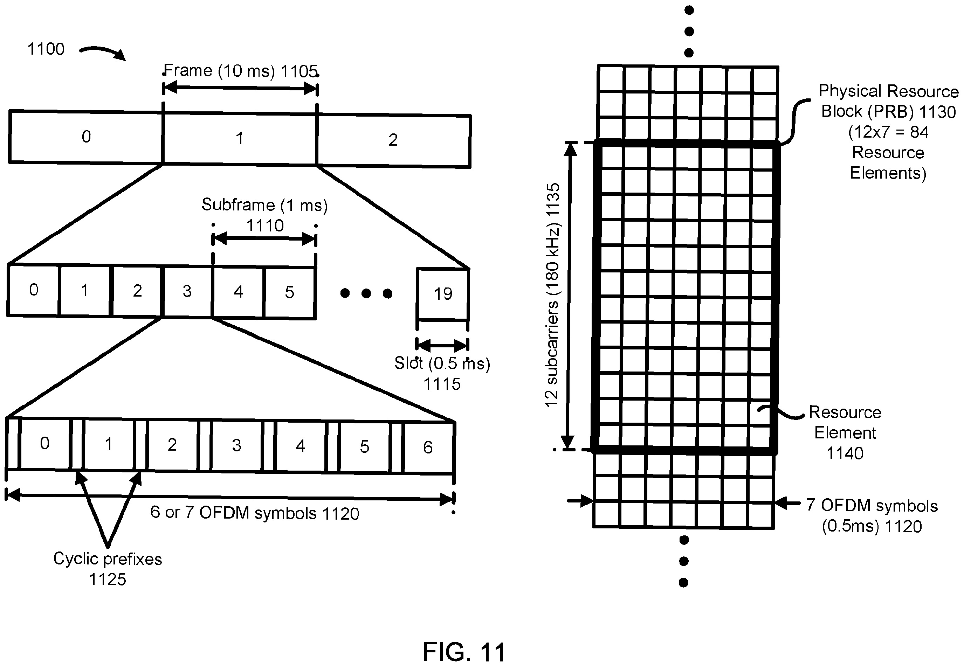

FIG. 11 is a schematic diagram 1100 illustrating the structure of a long term evolution (LTE) communication frame 1105. A frame 1105 has a duration of 10 milliseconds (ms). The frame 1105 includes 10 subframes 1110, each having a duration of 1 ms. Each subframe 1110 includes two slots 1115, each having a duration of 0.5 ms. Therefore, the frame 1105 includes 20 slots 1115.

Each slot 1115 includes six or seven orthogonal frequency-division multiplexing (OFDM) symbols 1120. The number of OFDM symbols 1120 in each slot 1115 is based on the size of the cyclic prefixes (CP) 1125. For example, the number of OFDM symbols 1120 in the slot 1115 is seven while in normal mode CP and six in extended mode CP.

In some embodiments, the smallest allocable unit for transmission is a resource block 1130 (i.e., physical resource block (PRB) 1130). Transmissions are scheduled by PRB 1130. A PRB 1130 consists of 12 consecutive subcarriers 1135, or 180 kHz, for the duration of one slot 1115 (0.5 ms). A resource element 1140, which is the smallest defined unit, consists of one OFDM subcarrier during one OFDM symbol interval. In the case of normal mode CP, each PRB 1130 consists of 12 × 7 = 84 resource elements 1140. Each PRB 1130 consists of 72 resource elements 1140 in the case of extended mode CP. In NR, a subcarrier spacing of PRBs can be altered as seen in FIG. 1.

Turning to Figure 12, an example of a portion of a radio access network (RAN) system 1200 that includes a single cellular air interface (such as an LTE/LTE-Advanced access link) being provided between the RAN Node A 1204 and the UE 1202 (i.e., on Access Link A 1212), and an air interface (a supplemental network interface such as a wireless local area network (WLAN) based interface) being provided between the RAN Node B 1206 and the UE 1202 (i.e., on Access Link B 1214). UE 1202 is located within coverage A area 1208. The UE 1202 determines that connection with a RAN Node B 1206 will be beneficial to a user of the UE 1202. In some embodiments, the UE 1202 retains Access Link A 1212 to RAN Node A 1204. The UE 1202 can offload some or part of wireless services onto Access Link A 1212. In other embodiments, the UE 1202 disconnects from Access Link A 1212 and moves wireless services to Access Link B 1214. In some embodiments Access Link A 1212 and Access Link B 1214 use a same frequency and technology. In other embodiments, Access Link A 1212 and Access Link B 1214 use different frequencies (e.g., LTE licensed frequencies and unlicensed frequencies) and different link technology (e.g., LTE and WLAN). In other embodiments, Access Link A 1212 and Access Link B 1214 use different frequencies and the similar link technology (e.g., LTE and LTE over mm Wave or LTE and NR).

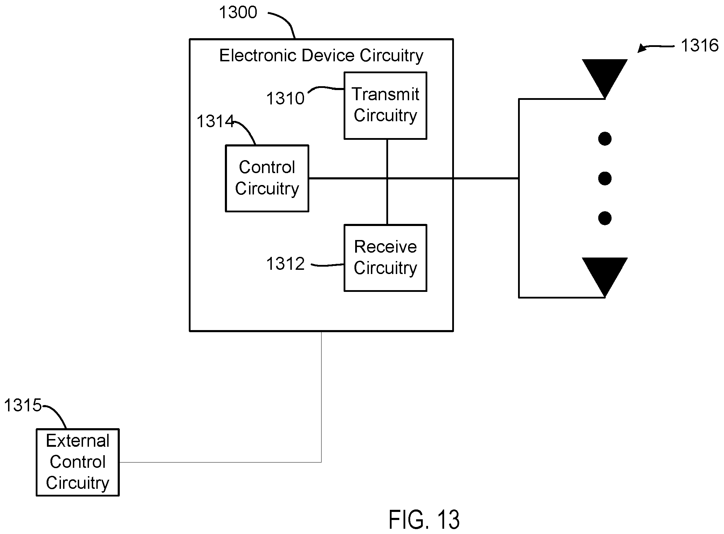

FIG. 13 is a block diagram illustrating electronic device circuitry 1300 that may be radio access node (RAN) node circuitry (such as an eNB circuitry), UE circuitry, network node circuitry, or some other type of circuitry in accordance with various embodiments. In embodiments, the electronic device circuitry 1300 may be, or may be incorporated into or otherwise a part of, a RAN Node (e.g., an eNB), a UE, a mobile station (MS), a BTS, a network node, or some other type of electronic device. In embodiments, the electronic device circuitry 1300 may include radio transmit circuitry 1310 and receive circuitry 1312 coupled to control circuitry 1314 (e.g., baseband processor(s), etc.). In embodiments, the transmit circuitry 1310 and/or receive circuitry 1312 may be elements or modules of transceiver circuitry, as shown. In some embodiments, some or all of the control circuitry 1314 can be in a device separate or external from the transmit circuitry 1310 and the receive circuitry 1312 (baseband processors shared by multiple antenna devices, as in cloud-RAN (C-RAN) implementations, for example).

The electronic device circuitry 1300 may be coupled with one or more plurality of antenna elements 1316 of one or more antennas. The electronic device circuitry 1300 and/or the components of the electronic device circuitry 1300 may be configured to perform operations similar to those described elsewhere in this disclosure.

In embodiments where the electronic device circuitry 1300 is or is incorporated into or otherwise part of a UE, the transmit circuitry 1310 can transmit a measurement report as shown in FIG. 7. The receive circuitry 1312 can receive an IE as shown in FIG. 7.

In embodiments where the electronic device circuitry 1300 is an eNB, BTS and/or a network node, or is incorporated into or is otherwise part of an eNB, BTS and/or a network node, the transmit circuitry 1310 can transmit an IE as shown in FIG. 7. The receive circuitry 1312 can receive a measurement report as shown in FIG. 7.

In certain embodiments, the electronic device circuitry 1300 shown in FIG. 13 is operable to perform one or more methods, such as the methods shown in FIG. 10.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

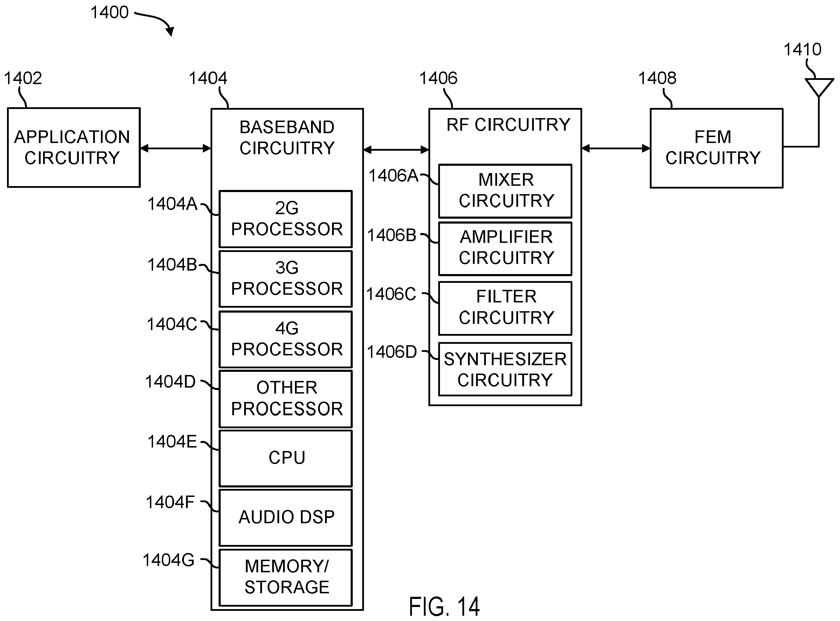

Embodiments described herein may be implemented into a system using any suitably configured hardware and/or software. FIG. 14 is a block diagram illustrating, for one embodiment, example components of a user equipment (UE) or mobile station (MS) device 1400. In some embodiments, the UE device 1400 may include application circuitry 1402, baseband circuitry 1404, Radio Frequency (RF) circuitry 1406, front-end module (FEM) circuitry 1408, and one or more antennas 1410, coupled together at least as shown in FIG. 14.

The application circuitry 1402 may include one or more application processors. By way of non-limiting example, the application circuitry 1402 may include one or more single-core or multi-core processors. The processor(s) may include any combination of general-purpose processors and dedicated processors (e.g., graphics processors, application processors, etc.). The processor(s) may be operably coupled and/or include memory/storage, and may be configured to execute instructions stored in the memory/storage to enable various applications and/or operating systems to run on the system.

By way of non-limiting example, the baseband circuitry 1404 may include one or more single-core or multi-core processors. The baseband circuitry 1404 may include one or more baseband processors and/or control logic. The baseband circuitry 1404 may be configured to process baseband signals received from a receive signal path of the RF circuitry 1406. The baseband circuitry 1404 may also be configured to generate baseband signals for a transmit signal path of the RF circuitry 1406. The baseband circuitry 1404 may interface with the application circuitry 1402 for generation and processing of the baseband signals, and for controlling operations of the RF circuitry 1406.

By way of non-limiting example, the baseband circuitry 1404 may include at least one of a second generation (2G) baseband processor 1404A, a third generation (3G) baseband processor 1404B, a fourth generation (4G) baseband processor 1404C, other baseband processor(s) 1404D for other existing generations, and generations in development or to be developed in the future (e.g., fifth generation (5G), 6G, etc.). The baseband circuitry 1404 (e.g., at least one of baseband processors 1404A-1404D) may handle various radio control functions that enable communication with one or more radio networks via the RF circuitry 1406. By way of non-limiting example, the radio control functions may include signal modulation/demodulation, encoding/decoding, radio frequency shifting, other functions, and combinations thereof. In some embodiments, modulation/demodulation circuitry of the baseband circuitry 1404 may be programmed to perform Fast-Fourier Transform (FFT), precoding, constellation mapping/demapping functions, other functions, and combinations thereof. In some embodiments, encoding/decoding circuitry of the baseband circuitry 1404 may be programmed to perform convolutions, tail-biting convolutions, turbo, Viterbi, Low Density Parity Check (LDPC) encoder/decoder functions, other functions, and combinations thereof. Embodiments of modulation/demodulation and encoder/decoder functions are not limited to these examples, and may include other suitable functions.

In some embodiments, the baseband circuitry 1404 may include elements of a protocol stack. By way of non-limiting example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1404E of the baseband circuitry 1404 may be programmed to run elements of the protocol stack for signaling of the PHY, MAC, RLC, PDCP and/or RRC layers. In some embodiments, the baseband circuitry 1404 may include one or more audio digital signal processor(s) (DSP) 1404F. The audio DSP(s) 1404F may include elements for compression/decompression and echo cancellation. The audio DSP(s) 1404F may also include other suitable processing elements.

The baseband circuitry 1404 may further include memory/storage 1404G. The memory/storage 1404G may include data and/or instructions for operations performed by the processors of the baseband circuitry 1404 stored thereon. In some embodiments, the memory/storage 1404G may include any combination of suitable volatile memory and/or non-volatile memory. The memory/storage 1404G may also include any combination of various levels of memory/storage including, but not limited to, read-only memory (ROM) having embedded software instructions (e.g., firmware), random access memory (e.g., dynamic random access memory (DRAM)), cache, buffers, etc. In some embodiments, the memory/storage 1404G may be shared among the various processors or dedicated to particular processors.

Components of the baseband circuitry 1404 may be suitably combined in a single chip, a single chipset, or disposed on a same circuit board in some embodiments. In some embodiments, some or all of the constituent components of the baseband circuitry 1404 and the application circuitry 1402 may be implemented together, such as, for example, on a system on a chip (SOC).

In some embodiments, the baseband circuitry 1404 may provide for communication compatible with one or more radio technologies. For example, in some embodiments, the baseband circuitry 1404 may support communication with an evolved universal terrestrial radio access network (EUTRAN) and/or other wireless metropolitan area networks (WMAN), a wireless local area network (WLAN), and a wireless personal area network (WPAN). Embodiments in which the baseband circuitry 1404 is configured to support radio communications of more than one wireless protocol may be referred to as multi-mode baseband circuitry.

The RF circuitry 1406 may enable communication with wireless networks using modulated electromagnetic radiation through a non-solid medium. In various embodiments, the RF circuitry 1406 may include switches, filters, amplifiers, etc. to facilitate the communication with the wireless network. The RF circuitry 1406 may include a receive signal path which may include circuitry to down-convert RF signals received from the FEM circuitry 1408, and provide baseband signals to the baseband circuitry 1404. The RF circuitry 1406 may also include a transmit signal path which may include circuitry to up-convert baseband signals provided by the baseband circuitry 1404, and provide RF output signals to the FEM circuitry 1408 for transmission.

In some embodiments, the RF circuitry 1406 may include a receive signal path and a transmit signal path. The receive signal path of the RF circuitry 1406 may include mixer circuitry 1406A, amplifier circuitry 1406B, and filter circuitry 1406C. The transmit signal path of the RF circuitry 1406 may include filter circuitry 1406C and mixer circuitry 1406A. The RF circuitry 1406 may further include synthesizer circuitry 1406D configured to synthesize a frequency for use by the mixer circuitry 1406A of the receive signal path and the transmit signal path. In some embodiments, the mixer circuitry 1406A of the receive signal path may be configured to down-convert RF signals received from the FEM circuitry 1408 based on the synthesized frequency provided by synthesizer circuitry 1406D. The amplifier circuitry 1406B may be configured to amplify the down-converted signals.

The filter circuitry 1406C may include a low-pass filter (LPF) or band-pass filter (BPF) configured to remove unwanted signals from the down-converted signals to generate output baseband signals. Output baseband signals may be provided to the baseband circuitry 1404 for further processing. In some embodiments, the output baseband signals may include zero-frequency baseband signals, although this is not a requirement. In some embodiments, the mixer circuitry 1406A of the receive signal path may comprise passive mixers, although the scope of the embodiments is not limited in this respect.

In some embodiments, the mixer circuitry 1406A of the transmit signal path may be configured to up-convert input baseband signals based on the synthesized frequency provided by the synthesizer circuitry 1406D to generate RF output signals for the FEM circuitry 1408. The baseband signals may be provided by the baseband circuitry 1404 and may be filtered by filter circuitry 1406C. The filter circuitry 1406C may include a low-pass filter (LPF), although the scope of the embodiments is not limited in this respect. In some embodiments, the mixer circuitry 1406A of the receive signal path and the mixer circuitry 1406A of the transmit signal path may include two or more mixers, and may be arranged for quadrature downconversion and/or upconversion, respectively. In some embodiments, the mixer circuitry 1406A of the receive signal path and the mixer circuitry 1406A of the transmit signal path may include two or more mixers and may be arranged for image rejection (e.g., Hartley image rejection). In some embodiments, the mixer circuitry 1406A of the receive signal path and the mixer circuitry 1406A may be arranged for direct downconversion and/or direct upconversion, respectively. In some embodiments, the mixer circuitry 1406A of the receive signal path and the mixer circuitry 1406A of the transmit signal path may be configured for super-heterodyne operation.

In some embodiments, the output baseband signals and the input baseband signals may be analog baseband signals, although the scope of the embodiments is not limited in this respect. In some alternative embodiments, the output baseband signals and the input baseband signals may be digital baseband signals. In such embodiments, the RF circuitry 1406 may include analog-to-digital converter (ADC) and digital-to-analog converter (DAC) circuitry, and the baseband circuitry 1404 may include a digital baseband interface to communicate with the RF circuitry 1406.

In some dual-mode embodiments, separate radio IC circuitry may be provided for processing signals for each spectrum, although the scope of the embodiments is not limited in this respect.

In some embodiments, the synthesizer circuitry 1406D may include one or more of a fractional-N synthesizer and a fractional N/N+1 synthesizer, although the scope of the embodiments is not limited in this respect as other types of frequency synthesizers may be suitable. For example, synthesizer circuitry 1406D may include a delta-sigma synthesizer, a frequency multiplier, a synthesizer comprising a phase-locked loop with a frequency divider, other synthesizers and combinations thereof.

The synthesizer circuitry 1406D may be configured to synthesize an output frequency for use by the mixer circuitry 1406A of the RF circuitry 1406 based on a frequency input and a divider control input. In some embodiments, the synthesizer circuitry 1406D may be a fractional N/N+1 synthesizer.

In some embodiments, frequency input may be provided by a voltage controlled oscillator (VCO), although that is not a requirement. Divider control input may be provided by either the baseband circuitry 1404 or the application processor 1402 depending on the desired output frequency. In some embodiments, a divider control input (e.g., N) may be determined from a look-up table based on a channel indicated by the applications processor 1402.

The synthesizer circuitry 1406D of the RF circuitry 1406 may include a divider, a delay-locked loop (DLL), a multiplexer and a phase accumulator. In some embodiments, the divider may include a dual modulus divider (DMD), and the phase accumulator may include a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements; a phase detector; a charge pump; and a D-type flip-flop. In such embodiments, the delay elements may be configured to break a VCO period up into Nd equal packets of phase, where Nd is the number of delay elements in the delay line. In this way, the DLL may provide negative feedback to help ensure that the total delay through the delay line is one VCO cycle.

In some embodiments, the synthesizer circuitry 1406D may be configured to generate a carrier frequency as the output frequency. In some embodiments, the output frequency may be a multiple of the carrier frequency (e.g., twice the carrier frequency, four times the carrier frequency, etc.) and used in conjunction with a quadrature generator and divider circuitry to generate multiple signals at the carrier frequency with multiple different phases with respect to each other. In some embodiments, the output frequency may be a LO frequency (fLO). In some embodiments, the RF circuitry 1406 may include an IQ/polar converter.

The FEM circuitry 1408 may include a receive signal path which may include circuitry configured to operate on RF signals received from one or more antennas 1410, amplify the received signals, and provide the amplified versions of the received signals to the RF circuitry 1406 for further processing. The FEM circuitry 1408 may also include a transmit signal path which may include circuitry configured to amplify signals for transmission provided by the RF circuitry 1406 for transmission by at least one of the one or more antennas 1410.

In some embodiments, the FEM circuitry 1408 may include a TX/RX switch configured to switch between a transmit mode and a receive mode operation. The FEM circuitry 1408 may include a receive signal path and a transmit signal path. The receive signal path of the FEM circuitry 1408 may include a low-noise amplifier (LNA) to amplify received RF signals and provide the amplified received RF signals as an output (e.g., to the RF circuitry 1406). The transmit signal path of the FEM circuitry 1408 may include a power amplifier (PA) configured to amplify input RF signals (e.g., provided by RF circuitry 1406), and one or more filters configured to generate RF signals for subsequent transmission (e.g., by one or more of the one or more antennas 1410.

In some embodiments, the MS device 1400 may include additional elements such as, for example, memory/storage, a display, a camera, one of more sensors, an input/output (I/O) interface, other elements, and combinations thereof.

In some embodiments, the MS device 1400 may be configured to perform one or more processes, techniques, and/or methods as described herein, or portions thereof.

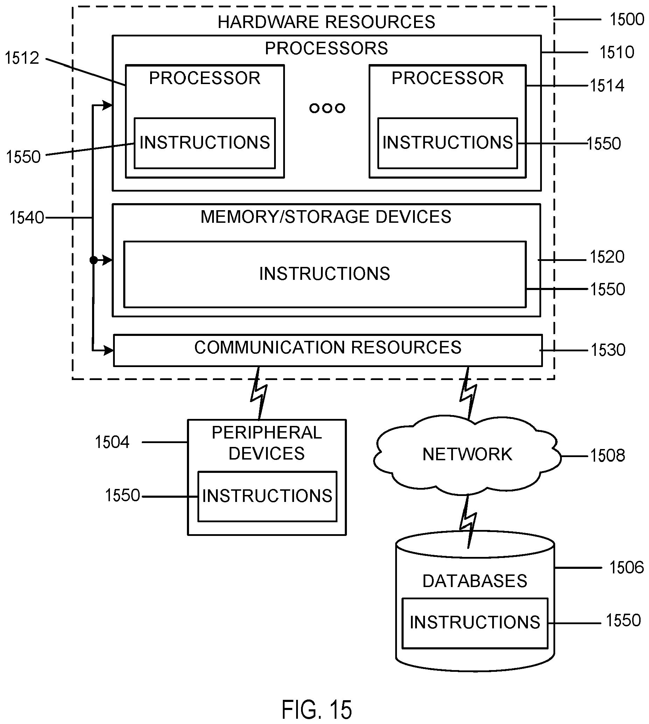

FIG. 15 is a block diagram illustrating components, according to some example embodiments, able to read instructions from a machine-readable or computer-readable medium (e.g., a machine-readable storage medium) and perform any one or more of the methodologies discussed herein. Specifically, FIG. 15 shows a diagrammatic representation of hardware resources 1500 including one or more processors (or processor cores) 1510, one or more memory/storage devices 1520, and one or more communication resources 1530, each of which are communicatively coupled via a bus 1540.

The processors 1510 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1512 and a processor 1514. The memory/storage devices 1520 may include main memory, disk storage, or any suitable combination thereof.

The communication resources 1530 may include interconnection and/or network interface components or other suitable devices to communicate with one or more peripheral devices 1504 and/or one or more databases 1506 via a network 1508. For example, the communication resources 1530 may include wired communication components (e.g., for coupling via a Universal Serial Bus (USB)), cellular communication components, Near Field Communication (NFC) components, Bluetooth^{®} components (e.g., Bluetooth^{®} Low Energy), Wi-Fi^{®} components, and other communication components.

instructions 1550 may comprise software, a program, an application, an applet, an app, or other executable code for causing at least any of the processors 1510 to perform any one or more of the methodologies discussed herein. The instructions 1550 may reside, completely or partially, within at least one of the processors 1510 (e.g., within the processor's cache memory), the memory/storage devices 1520, or any suitable combination thereof. Furthermore, any portion of the instructions 1550 may be transferred to the hardware resources 1500 from any combination of the peripheral devices 1504 and/or the databases 1506. Accordingly, the memory of processors 1510, the memory/storage devices 1520, the peripheral devices 1504, and the databases 1506 are examples of computer-readable and machine-readable media.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and one or more clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell^{®}, Microsoft^{®}, and other vendors, and may operate using TCP/IP, SPX, IPX, and other protocols over twisted pair, coaxial, or optical fiber cables, telephone lines, radio waves, satellites, microwave relays, modulated AC power lines, physical media transfer, and/or other data transmission "wires" known to those of skill in the art. The network may encompass smaller networks and/or be connectable to other networks through a gateway or similar mechanism.

Various techniques, or certain aspects or portions thereof, may take the form of program code (i.e., instructions) embodied in tangible media, such as floppy diskettes, CD-ROMs, hard drives, magnetic or optical cards, solid-state memory devices, a nontransitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and nonvolatile memory and/or storage elements), at least one input device, and at least one output device. The volatile and nonvolatile memory and/or storage elements may be a RAM, an EPROM, a flash drive, an optical drive, a magnetic hard drive, or other medium for storing electronic data. The RAN Node (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an obj ect-oriented programming language to communicate with a computer system. However, the program(s) may be implemented in assembly or machine language, if desired. In any case, the language may be a compiled or interpreted language, and combined with hardware implementations.

Each computer system includes one or more processors and/or memory; computer systems may also include various input devices and/or output devices. The processor may include a general purpose device, such as an Intel^{®}, AMD^{®}, or other "off-the-shelf' microprocessor. The processor may include a special purpose processing device, such as ASIC, SoC, SiP, FPGA, PAL, PLA, FPLA, PLD, or other customized or programmable device. The memory may include static RAM, dynamic RAM, flash memory, one or more flip-flops, ROM, CD-ROM, DVD, disk, tape, or magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, or off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Several aspects of the embodiments described will be illustrated as software modules or components. As used herein, a software module or component may include any type of computer instruction or computer-executable code located within a memory device. A software module may, for instance, include one or more physical or logical blocks of computer instructions, which may be organized as a routine, program, object, component, data structure, etc., that perform one or more tasks or implement particular data types. It is appreciated that a software module may be implemented in hardware and/or firmware instead of or in addition to software. One or more of the functional modules described herein may be separated into sub-modules and/or combined into a single or smaller number of modules.

In certain embodiments, a particular software module may include disparate instructions stored in different locations of a memory device, different memory devices, or different computers, which together implement the described functionality of the module. Indeed, a module may include a single instruction or many instructions, and may be distributed over several different code segments, among different programs, and across several memory devices. Some embodiments may be practiced in a distributed computing environment where tasks are performed by a remote processing device linked through a communications network. In a distributed computing environment, software modules may be located in local and/or remote memory storage devices. In addition, data being tied or rendered together in a database record may be resident in the same memory device, or across several memory devices, and may be linked together in fields of a record in a database across a network.

Reference throughout this specification to "an example" means that a particular feature, structure, or characteristic described in connection with the example is included in at least one embodiment of the present disclosure. Thus, appearances of the phrase "an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples of the present disclosure may be referred to herein along with alternatives for the various components thereof.

Furthermore, the described features, structures, or characteristics may be combined in any suitable manner in one or more embodiments. In the following description, numerous specific details are provided, such as examples of materials, frequencies, sizes, lengths, widths, shapes, etc., to provide a thorough understanding of embodiments. One skilled in the relevant art will recognize, however, that the embodiments may be practiced without one or more of the specific details, or with other methods, components, materials, etc. In other instances, well-known structures, materials, or operations are not shown or described in detail to avoid obscuring aspects.

It should be recognized that the systems described herein include descriptions of specific embodiments. These embodiments can be combined into single systems, partially combined into other systems, split into multiple systems or divided or combined in other ways. In addition, it is contemplated that parameters/attributes/aspects/etc. of one embodiment can be used in another embodiment. The parameters/attributes/aspects /etc. are merely described in one or more embodiments for clarity, and it is recognized that the parameters/attributes/aspects /etc. can be combined with or substituted for parameters/attributes/etc. of another embodiment unless specifically disclaimed herein.

## Claims

1. An apparatus of a user equipment (502, 702, 1400) comprising:
a baseband processing unit (1404) configured to:
decode an information element, IE, received from a radio access network, RAN, node describing subcarrier spacing of neighboring carriers;
perform radio resource management, RRM, measurements of a set of the neighboring carriers using the subcarrier spacing of neighboring subcarriers described in the IE decoded by the UE; and
generate a measurement report (512, 712) describing results of the RRM measurements for transmission to the RAN node.

2. The apparatus of claim 1, wherein the IE is decoded from a system information block, SIB, broadcast.

3. The apparatus of claim 1, wherein the IE is decoded from radio resource control, RRC, signaling.

4. The apparatus of claim 1, wherein the RRM measurements are inter-frequency measurements.

5. The apparatus of claim 1, wherein the RRM measurements are intra-frequency measurements.

6. The apparatus of claim 1, wherein the IE comprises a MeasObjectNR IE.

## Patentansprüche

1. Vorrichtung eines Benutzergeräts (502, 702, 1400), umfassend:
eine Basisbandverarbeitungseinheit (1404), die konfiguriert ist zum:
Decodieren eines Informationselements, IE, das von einem Funkzugangsnetzwerk-, RAN,-Knoten empfangen wird, das einen Unterträgerabstand von benachbarten Trägern beschreibt;
Durchführen von Funkressourcenverwaltungs-, RRM,-Messungen eines Satzes der benachbarten Träger unter Verwendung des Unterträgerabstands von benachbarten Unterträgern, der in dem vom UE decodierten IE beschrieben ist; und
Erzeugen eines Messberichts (512, 712), der Ergebnisse der RRM-Messungen zur Übertragung an den RAN-Knoten beschreibt.

2. Vorrichtung nach Anspruch 1, wobei das IE aus einer Systeminformationsblock-, SIB,-Rundsendung decodiert wird.

3. Vorrichtung nach Anspruch 1, wobei das IE aus Funkressourcensteuerungs-, RRC,-Signalisierung empfangen wird.

4. Vorrichtung nach Anspruch 1, wobei die RRM-Messungen Interfrequenzmessungen sind.

5. Vorrichtung nach Anspruch 1, wobei die RRM-Messungen Intrafrequenzmessungen sind.

6. Vorrichtung nach Anspruch 1, wobei das IE ein MeasObjectNR IE umfasst.

## Revendications

1. Un appareil d'un équipement utilisateur (502, 702, 1400), comprenant :
une unité de traitement de bande de base (1404) configurée pour :
décoder un élément d'information, IE, reçu d'un noeud de réseau d'accès radio, RAN, décrivant un espacement de sous-porteuses de porteuses voisines ;
effectuer des mesures de gestion de ressources radio, RRM, d'un ensemble des porteuses voisines en utilisant l'espacement de sous-porteuses de sous-porteuses voisines décrit dans l'IE décodé par l'UE ; et
générer un rapport de mesure (512, 712) décrivant les résultats des mesures RRM, pour transmission au noeud RAN.

2. L'appareil de la revendication 1, dans lequel l'IE est décodé à partir d'un broadcast de bloc d'information système, SIB.

3. L'appareil de la revendication 1, dans lequel l'IE est décodé à partir d'une signalisation de contrôle de ressources radio, RRC.

4. L'appareil de la revendication 1, dans lequel les mesures RRM sont des mesures inter-fréquence.

5. L'appareil de la revendication 1, dans lequel les mesures RRM sont des mesures intra-fréquence.

6. L'appareil de la revendication 1, dans lequel l'IE comprend un IE MeasObjectNR.
